# EUROPEAN PATENT SPECIFICATION

(11) **EP 2 035 186 B1**
(45) Date of publication and mention of the grant of the patent: **23.09.2009**
(21) Application number: 06796210.0
(22) Date of filing: 03.07.2006
(51) Int. Cl.: B23Q 3/18, B25J 19/06

(54) **SYSTEM FOR THE RAPID CHANGE OF HEAD ON OPERATING MACHINES**
SYSTEM ZUM SCHNELLEN WECHSEL VON KÖPFEN AN BETRIEBSMASCHINEN
SYSTÈME POUR LE CHANGEMENT RAPIDE DE TÊTE SUR DES MACHINES DE FONCTIONNEMENT

(43) Date of publication of application: 18.03.2009
(73) Proprietor: Valiani S.r.l., 50052 Certaldo (FI) (IT)
(72) Inventor: VALIANI, Franco, 50052 Certaldo (IT)
(74) Representative: Turini, Laura
(86) International application number: PCT/IT2006/000508
(87) International publication number: WO 2008/004253

(56) References cited:
- DE-A1- 19 842 442
- DE-A1- 19 938 114
- US-A- 5 782 445

## Description

### Technical Field

The present invention concerns the technical sector relative to the production of large and small re-entrant production machineries in the field of industrial automation.

The present invention can be applied on an infinite type of machineries, anyway provided with a head that must be interchanged. In particular, this invention is herein described concerning machines that make the cut and/or decoration of "passe-partout" or other elements made of cardboard or corrugated cardboard, glass or ceramic, consequently concerning the relative existing machines designed for their production. This invention relates indeed to a system for the rapid change of the head of a machine, either for the cut or the decoration of any item. According to the functions it fulfils, the head can have a "pen", or other similar element, instead of a blade, in order to make the decoration, but this is not important for the purposes of the present invention. The descriptive restriction to the machines for the cut and/or the decoration does not exclude any possible application to machines with different functions.

### Background Art

Everybody knows different types of machines that have not only the moving mechanism, but also the main part called "head" that fulfils the desired work. The head can be used for cutting, engraving, drawing or for performing any other operation on a piece that must be worked.

In all these types of machines, it's often necessary to replace the head with one of different type for performing a different work, it's therefore important to make this substitution rapidly and safely.

In particular, in the sector of paper-technique, there are machines that make the cut or the decoration of cardboard, either smooth or corrugated. Similar machines are also used in the sector of decoration of items made of glass, ceramic, plastic or other material.

This description will focus on the machines used for the cut of passe-partout, just to highlight a technical sector where this invention can be validly used. The "passe-partout" is the particular frame inserted inside the glass of pictures, either prints, paintings or whatever, with the function of creating a stand-out, generally of constant wideness, between the external frame and the subject of the picture.

Shapes and dimensions of the passe-partout can vary, but the most common ones are rectangular.

The material they are made of is generally white or coloured paper, thin enough to be inserted between picture and glass, for this reason it needs a restricted mechanical force to be cut. Nevertheless, in order to get this cut, we need a suitably directed and sharp blade, as well as a precise perfect speed and approaching direction.

Nowadays, different types of machineries exist for this purpose, which can be briefly described as follows.

These machines comprise a main group supporting vertically the cutting head, so that it can vertically move going up and down on the item to be worked, in the sudden directional changes of cut. The axial movement can be either pneumatic, hydraulic or electromechanical, according to the general concept of the machinery at issue. These machines comprise an engine group that allows the head to rotate; normally it's an electric engine, easier to be electronically controlled: a drive pulley will be fitted on the output shaft of the engine, so that the engine, through timing belt, transmits the rotation to the head holding the cutting tool.

The head, axially connected to the main group with vertical movement, has a shaft in axis where the drive pulley is fitted, connected indeed to the rotating engine group.

This connection is free in movement from the axial bound. This is a device that can be mechanically manufactured by means of several known systems.

In this way, we get a head provided at the lower end with a blade for the cut of the paper; said blade, placed at suitable working phase, rotates thanks to the pulley axially fitted that, connected to the engine group by timing belt, gives to the same blade the desired changes of direction, without further raising the group in case of continuous or ray geometrical shapes (circles, ellipses, etc.), or by linear approaching stop whenever angles must be formed, in this case we'll have the angular settlement after the raising of the same head.

The transversal motion of the group can be the one of any known automatic machinery.

The above-described concept is nowadays perfectly working, as it offers a perfect result both from a qualitative and productive point of view. Obviously, the speed of production depends on many factors, but conceptually the described system does not have immediate visible drawbacks.

On the contrary, the problem is the need to substitute manually the cutting tool that, obviously, should have different characteristics according to the different materials, the different types of cut or the different operations to fulfil.

Using this head, it's possible to cut also packing boxes and with a further head it's possible to engrave the paper in order to create some bends that facilitate the closure of the boxes. In this specific field, this operation is very difficult and laborious, except for some machines that have two heads (one for 45° cut, one for 90° cut). Nonetheless, these machines have a considerable high cost because they must have a further specific axis, beyond the standard three axes, for the additional head.

Sometimes, it's therefore necessary to perform cuts with different slopes, 90° or 45° or other degrees cuts. In this case, it's important to substitute rapidly the head, so as to get with a traditional one-head machine and lower costs, the same technical result as the one obtained by a machine equipped with more heads.

In addition, the head can be changed in order to substitute the blade with pens or other accessories that decorate the item instead of cutting.

Yet, the final accessory holding the blade, the pen or similar, on current machines, is changed, according to the known art, with absolutely not fast operations.

Despite the design mechanical variations of each producer, in order to change the head it's necessary to have a tool, such as a key, which acts on a joint, either realized by threading, or (conical) friction, or whatever currently existing for this purpose.

As this operation must be carried out frequently, the effectiveness of the machine is considerably reduced by these necessary interruptions.

Moreover, these substitutions considerably slow down the production, involving in practice substantial effects.

Document DE-A-199 38 114 discloses a machine comprising a fixing element 1 for supporting a support element 3 for a tool 2. This machine is particularly used in the cars factories for performing operations like the painting of chassis of the cars or the lifting of them. According to the solution proposed in this document? the support tool 3 is connected to the fixing element 1 by magnetic connection 5. This known machine is adapted to avoid the breakage of the tool 2 in case of accidental hitting against parts processed by the machine. Anyway this machine has a very complicated structure not adapted to support a rotating tool and for a rapid change of the

### Disclosure of invention

The present invention aims at avoiding the above-mentioned and other drawbacks, supplying a system that permits to substitute simply and rapidly, without the need of further tools such as keys, levers or other, the head of an operating machine, in particular cutting or decorating machines, in order to change the accessories connected to it, like blades or pens, which can be installed from time to time on the rotating head of said machines.

This system can be used on several types of machinery with reaction forces similar to the ones of the described works, not restricting this solution only to the specific sector of the paper-technique.

By the term "head" we mean the final portion of the operating arm of a machine, equipped with tools, either for cutting, decorating or other, which act on a defined item. Substituting the head, the accessories applied or integrated to it are substituted as well.

The advantages resulting from the present invention essentially consist of the fact that the work is accelerated, regardless of the type of work to be done, for example cuts with different slopes and/or more or less ornate decorations; that the component of force necessary for removing the head is very low, therefore the head can be easily removed by any worker; that this low component permits the removal of the head just with one hand; that this assembling component, even if low, does not reduce at all the effectiveness of the object, as it is sufficient both in non-operational movements of angular approach and, above all, in the working dynamic, as a matter of fact this specific component is increased by the pressure exerted on the tool by the axial motion and kept constant by electrovalves controlled by sensors applied over the supporting wheel; that this invention permits a rapid change of tool; that this device perfectly suits the existing specific machineries; that this executive concept can be simply transferred to other working sectors, in other machineries; that, keeping the working dynamic unchanged, this new device is capable to realize any type of passe-partout of various shape (rectangular, circular, elliptical, etc.), possibly after raising and new angular direction of the blade in case of angles.

Reduced to its essential structure and with reference to the figures of the enclosed drawings, a system for the rapid change of head in an operating machine, according to the present invention, comprises:
means to realize a stable attraction between the head (3) and any element over it, like a pulley (2), with said over element comprising at least one, preferably more than one, magnet or similar, having enough force to keep the head bound even without mechanical block elements.

This system comprises balance elements between said over element, like a pulley, and said head.

Conveniently, in order to bind simply, rapidly and efficiently, as above-mentioned, the head (3), equipped with cutting blade (4) and/or pen, to the partial movable arm of a machinery, the element over the head, like a pulley (2), comprises at least one, preferably more than one, hole (10) of suitable diameter and thickness proportional to the one of said over element, containing at least one connected magnet (11), of same diameter but slightly shorter, in order to avoid any projection on the surface.

Conveniently, the holes (10) and the related magnets (11) are more than one, preferably three.

Said magnets can be replaced with other elements however capable of forming a magnetic field, such as a solenoid or other similar device. A solenoid, when energized, generates a magnetic field that can also be annulled stopping the passage of electricity. By this second system, it's therefore possible to create even an intense magnetic field that entails no problems to the successive removal of the head, as it can be easily annulled in order to avoid any obstacle to said operation.

This system comprises also means to bind and axially centre the head (3), equipped with cutting blade (4) or pen or other tool, consisting of a calibrated hole (16), realized on the same head, which fits during assembly on the extension of the axis (8) of the over element, like a pulley (2), fitted on said axis, so obtaining a perfect longitudinal alignment.

This system also comprises means to obtain, between the two components to assemble (2) and (3), an angular bound defining radial balance, constituted by a calibrated steel plug (13) inserted into suitable hole (15) positioned on the pulley (2), from which it extends for a certain length.

Conveniently, in order to bind the head (3) in radial direction to said extending plug (13), this system comprises a particular milling (14) on the upper surface (12) of the head (3), with same diameter and as proportionally thick as the above cited extension.

The head, either equipped with cutting or decorating accessories or other, realized according to the present invention, is made so that it can be simply removed with just one hand in few seconds, without any need of specific tools, and replaced with a second head equipped with a different blade and/or pen necessary for the next operation, which may be either a decoration or a different cut or a work on another material.

The main characteristic of this invention is the extreme manufacturing simplicity of the device, facilitated by the absence, during work, of an axial removing component; for this reason, it can conveniently develop so as to meet exclusively the mechanical needs in all the other directions.

Therefore, this system, keeping the working dynamics of the current machineries unchanged, can be easily applied to all the existing machineries in this field and, with suitable adjustments, even to all the remaining machineries with similar mechanical needs.

In practice, it's sufficient to make exclusive adjustments on the apparatus holding the new accessory with blade or pen, which is conveniently represented by the driven pulley or other device, in axis with the raising system, controlled by the timing belt resulting from the rotating engine group. In this way, the perfect system that permits, by any specific system, to electronically control the rotational motion immediately and constantly, thus obtaining any shape - linear or curved, circular, elliptical - remains identical, allowing the most complete versatility of this invention on all the types of existing machines.

The driven pulley, fitted on a rotating vertical axis, free in this dynamic from the coaxial raising system, remains bound in contrast in the axial dynamics, as from known art, thus insisting on the complete interchangeability of this invention.

At suitable diameter, perpendicularly to the thickness of the pulley, there are three passing holes, at same distance, with diameter suitable to fit three magnets having cylindrical shape with same diameter as the holes and length not exceeding the band of the pulley.

On the same diameter, or on a conveniently prefixed diameter, there is a further passing hole, calibrated, for receiving the plug of radial interference, which will be hereafter described.

As a matter of fact, the final support, holding cutting blade or pen and supporting wheel, as well as the various devices indicating the positions, is mechanically structured so as to have a central calibrated hole, for balancing the axis of the pulley, and a metal plane with surfaces large enough to comprise, in contrast, the area filled by the magnets. The same upper supporting surface has an opening, with calibrated diameter, so that the above-mentioned plug places angularly the cutting element and, simultaneously, positions itself between the two relative rotational motions, perfectly binding them.

In this way, it will be sufficient to insert vertically in axis the device holding the blade or pen, led by the same axis of the upper pulley and angularly balanced thanks to the reinsertion of the angular interference plug.

The assembly is sufficiently realized by the action of the three magnets on the upper metal surface of the final support that, obviously worked, as well as the surface of the pulley, will involve a perfect contact between driven pulley and blade support; the angular bound will be given by the plug inside the calibrated cavity of the support and will be mechanically sufficient to the resistance of the applied couple, since it is per se very limited due to the specific kind of work.

The extreme facility and rapidity for changing tool is consequently evident, but it's worthy to illustrate more precisely the axial component.

Said axial component is ideal for the removal, providing the magnets with a limited force necessary for the disconnection (which means in vertical direction towards the working plane), and does not involve any risk of disconnection in the working dynamic and/or approach of the tool, since this external force, acting perpendicularly in the direction of removal, is actually absent in all the working and approaching phases; on the contrary, in the cutting phase, the force axially exerted and indicated by the supporting wheel to the vertical mechanics, possibly increases the action of assembly exerted by the same magnets.

In this way, we get a simple, practical system that can be integrated to the current machineries, maintaining their advantageous characteristics. This system, acting on the only dynamic normally used at present for changing the tool, permits a considerable productive development of all the specific machineries and, as above illustrated, of any other machinery with similar mechanical, static and dynamic needs.

System for the rapid change of the head in an operating machine, such as a machinery for the cut and/or decoration of passe-partout, or items made of cardboard, glass, ceramic or similar, which, according to the present invention, comprises at least one, preferably more than one, magnet or other device generating a magnetic field, capable of exerting an attracting force between at least one head (3) of said machine and at least one device of said machine where the head is or can be connected, and making this connection stable.

Said system wherein at least one magnet - which means either a ferromagnetic body or an electric machine generating magnetic field - is placed between at least one head (3) and at least one connecting device, like a pulley.

Said system wherein at least one magnet - which means either a ferromagnetic body or an electric machine generating magnetic field - is comprised on at least one connecting device, like a pulley, where at least one head (3) is connected.

Said system wherein at least one, preferably more than one, magnet or similar connects, thanks to its magnetic attraction, at least one head (3) with at least one pulley (2), connected in its turn to the movable arm of the operating machine.

Said system comprising a connecting device, like a pulley (2), between operating machine and at least one head (3) of the same machine, which comprises in its turn at least one, preferably more than one, magnet or similar, having enough force to keep the head bound even without mechanical block elements.

Said system wherein the connecting device, like a pulley, is located over the head (3) where it is connected.

Said system wherein, in the cutting phase, the force axially exerted increases the force exerted by the magnet(s), so reducing the risk of a possible separation of the head from the connecting device.

Said system wherein the force exerted by the magnet(s) is sufficient to keep the head bound to the connecting device, but however such as to be overcome by an opposite force exerted on it even by one hand in opposite direction to the one exerted by the magnet(s).

Said system wherein said magnet(s) is constituted by an electric machine generating a magnetic field that is deactivated in order to remove the head (3); thus when said magnetic field is annulled, the attraction will cease and the head can be separated by the connecting device without any need of particular force.

Said system comprising balance elements between said connecting device, like a pulley, and said at least one head.

Connecting device, like a pulley (2), between operating machine and at least one head (3) of it, which comprises at least one, preferably more than one, magnet or similar, having enough force to keep the head bound even without mechanical block elements.

Said connecting device comprising at least one, preferably more than one, holes (10) where the magnets (11) are fitted.

Conveniently, said magnets are fixed by bonding, fitting, forced assembly or any other system making its position stable.

Conveniently, the shape of the hole (10) is not important, as it can be circular or of any other shape.

Conveniently, the magnets are comprised inside the thickness of the connecting device, like a pulley, in order to avoid any obstacle to the coupling of the two contact surfaces, one of the connecting device and one of the head (3).

Conveniently, the holes (10) and the related magnets (11) are more than one, preferably three.

Said connecting device, like a pulley (2), comprising a hole (15), suitably directed and calibrated, containing a plug for the angular balance (13), which extends so as to find place in a milling (14) made on the surface of the head (3). Head, equipped with cutting blade (4) and/or pen and/or other accessory necessary for the work done by the operating machine, which comprises a calibrated hole (16) that fits during assembly on the extension of the axis (8) of the connecting device, like a pulley (2), fitted on said axis, so obtaining a perfect longitudinal alignment.

Said head comprising a milling (14) made on the upper surface (12) of the head (3), having the same shape and thickness as the plug (13) of the device (2), so that said plug can enter it, realizing an angular balance.

The substitution of the head through the described system can be fulfilled either manually or automatically by means of specific machines.

In practice, the manufacturing details may however vary as regards shape, size, position of elements and type of materials used, but still remain within the range of the idea proposed as a solution and consequently within the limits of the protection granted by this patent for invention.

### Brief description of drawings

The advantages of the present invention will be better understood by every expert in this field by referring to the enclosed drawings, given as practical examples of the invention but not to be considered restrictive.

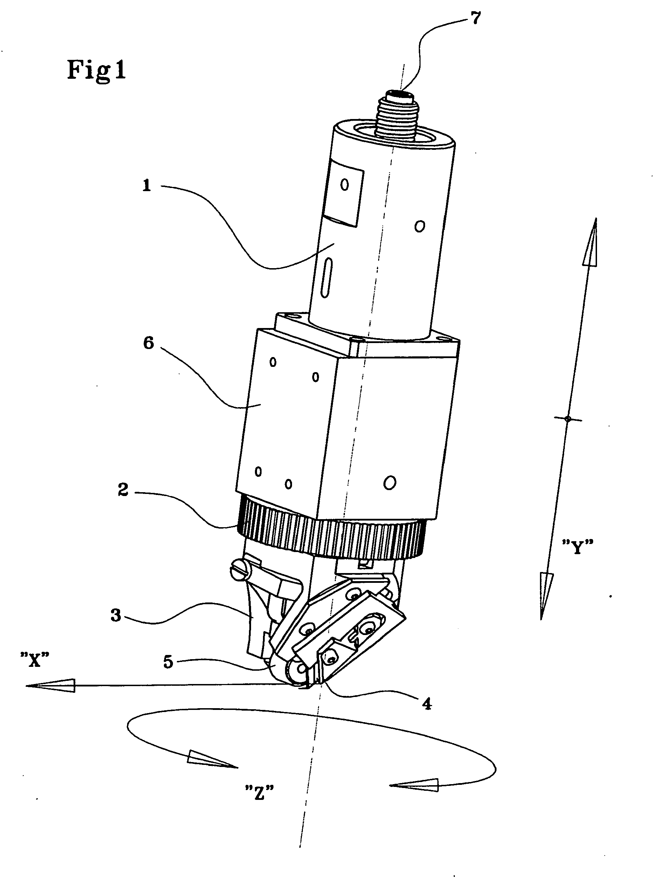

Fig. 1 shows a perspective assembled view of the executive arm of the machinery (1) with vertical movement, approximately perpendicular to the working plane, with "Y" direction inside the support (6) of the same arm. The vertical axes are positioned and supported by radial and axial bearings, by known art: the upper axis (7) is in some way connected to a linear actuator for the vertical extension (Y), while the lower axis, even if connected, is free to radically rotate; on this last axis, the pulley (2) for timing belt is fitted, connected to it by means of key or other mechanical system. Therefore, these characteristics entail a vertical movement of the whole system (1) and a free radial movement of the pulley (2), together with the lower head (3) holding the cutting blade (4) and/or the pen as well as the wheel (5) in contrast with it.

The rotation round the axis "Z" directs the blade (4) or the pen regardless of the relative rigidity of the arm (1). The approaching movement anticipating the cut or decoration is a flat horizontal "X" motion, given to the arm by the moving device of the machinery.

Despite this figure represents the assembled invention, intentionally in an approximate way, it illustrates however the dynamic already found in the current machineries.

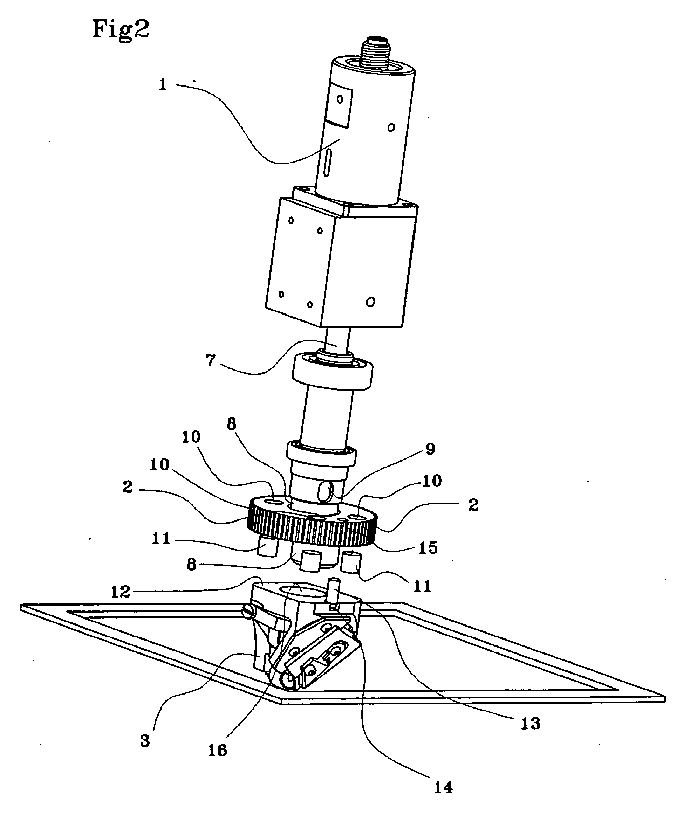

On the contrary, Fig. 2 shows the distinctive components of the present invention that allow the head (3), equipped with cutting blade (4) or pen, to be simply and rapidly installed. This figure shows an exploded view of the internal system (7), provided with relative balances, bearings, and whatever else necessary and known, having in the final rotating portion (8) of the axis a place for key (9), so as to radially bind the pulley (2).

The two surfaces of the same pulley (upper and lower surface or the pulley) comprise some passing holes (10) that receive cylindrical magnets (11) with same diameter and height not exceeding the thickness of the pulley (2).

In order to get a precise angular signal, necessary for the zero setting of the machine regardless of the substitution of the head (3), and a sufficient opposition in contrast with its rotation, there is a plug (13) having double function of balance and couple transmission: the axial balance is guaranteed by the hole (16) on the final support, which receives the extending end of the axis (8), whereas the balance or radial position is obtained because the position becomes inevitably angular during assembly in order to enter the related calibrated hole (15) made on suitable ray, perpendicularly to the surface of the pulley (2). The angular opposition, even if loose enough, is however ensured by the fitting position (14), realized by milling of calibrated diameter, made on the external side and for necessary thickness, with perpendicular direction, on the upper surface of the head (3).

The contact surfaces, upper surface of support (12) and lower surface of pulley (2), are flat for maintaining a correct mechanical alignment of the system.

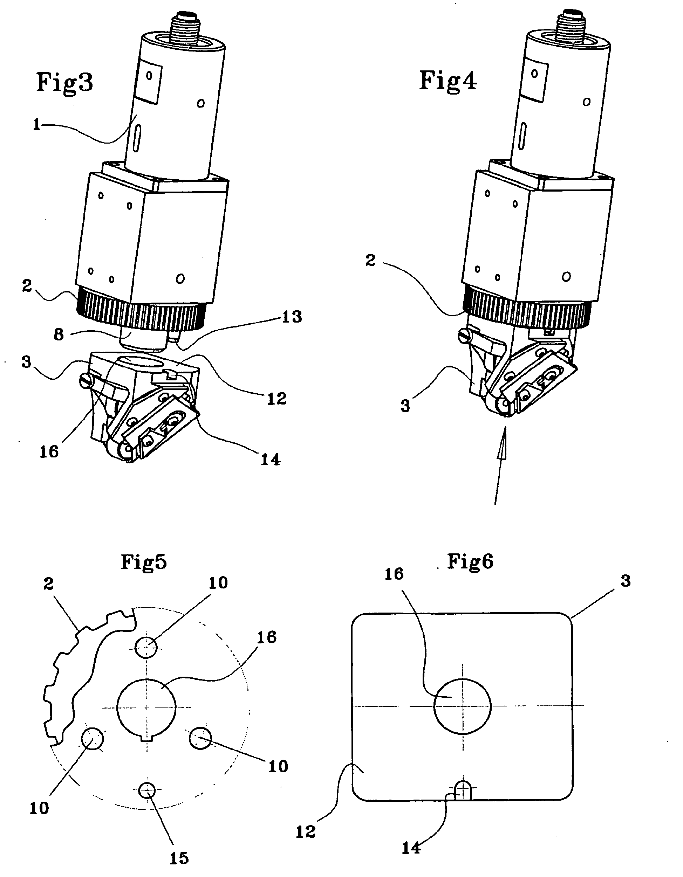

Figs. 3 and 4 respectively show the simple linear movement necessary for the worker to apply the head (3): the first figure shows the head (3) removed from the block (1); the head, equipped with central calibrated hole (16) realized on the upper surface (12), is inserted by means of a simple vertical push, obviously taking care of the axial balance, ensured by the hole (16) on the calibrated extension of the axis (8), and of the angular balance, by the insertion of the extending plug (13) in the related place (14).

Therefore, the action of the magnets fitted into the pulley (2) allows, with extreme simplicity, the assembly of the final cutting blade or pen, centred on the zero of the machine and suitable directed (Fig. 4).

For a more detailed illustration of this device, the next Figs. 5 and 6 respectively show the top view of the driven pulley (2) and of the upper contact surface of the head (3).

As above described, the pulley (2) comprises three passing holes (10) of suitable diameter, where the magnets fit by known systems (fitting, forced assembly with interference, etc.); it's obviously necessary that the magnets are completely encompassed inside the thickness of the pulley, in order to avoid any obstacle to the coupling of the two contact surfaces.

The pulley (2) also comprises a further hole (15), suitably directed and calibrated, containing, with similar stable assembly, the plug for the angular balance (13), which extends so as to find place in a milling (14) made on the surface of the head (3), depicted in the next figure. This last figure simply shows a top view of the device on the contact surface (12): it has an approximate rectangular shape and includes a central calibrated hole (16), necessary for the axial balance of the components, and the opening (14), of suitable thickness, for the angular balance.

## Claims

1. Operating machine, such as a machinery for the cut and/or decoration of passe-partout, or items made of cardboard, glass, ceramic or similar comprising a head (3), a device, a moveable arm and a System for the rapid change of the head (3), the said system comprising
at least one, preferably more than one magnet (11) or other device generating a magnetic field, capable of exerting an attraction force between at lest one head (3) of said machine and at least one device of said machine where the head (3) is to be connected, and making this connection stable, but at the same time removable,
said device to which the head (3) has to be connected being connected to a movable arm of said operating machine, **characterised in that** it comprises a rotating vertical axis (8), and
said device where the head (3) is to be connected is formed by a pulley (2);
said pulley (2) is fitted on a final portion of a rotating vertical axis (8) to which it is radially blocked by means of a key (9);
The upper and lower surface of the said pulley (2) comprises some passing holes (10) for receiving cylindrical magnets (11) that have the same diameter of said holes and height not exciding the thickness of the pulley (2) such that said magnets are comprised inside the thickness of the pulley encompassing completely inside it in order to avoid any obstacle to the coupling of the two contact surfaces one of the pulley (2) and one of the head (3);
the contact surfaces being the upper surface of a support (12) of the head (3) and said lower surface of pulley (2), said contact surfaces being flat for maintaining a correct mechanical alignment of said head (3) and said pulley (2);
the rotating vertical axis (8) having an extended end and the head (3) being equipped with a central calibrated hole (16) for receiving the extending end of the axis (8) which is calibrated;
the pulley (2) comprising a hole (15) containing a calibrated plug (13) for the angular balance the said plug extending in length to find a place in a milling (14) of the contact surface of the head (3) having the same shape and thickness as the plug (13) for binding the head (3) in radial direction to the plug (13);
the pulley (2) being a driven one and is controlled by a timing belt driven by a rotating engine.

2. An operating machine according to claim 1, in which the magnets are ferromagnetic bodies.

3. An operating machine according to claim 1 in which the magnets are constituted by an electric machine generating a magnetic field.

4. An operating machine according to one or more of the preceding claims **characterized in that** three or more magnets are provided.

## Patentansprüche

1. Werkzeugmaschine, wie etwa eine Maschine zum Schneiden und/oder Verzieren von Passepartouts oder von Gegenständen aus Karton, Glas, Keramik oder dergleichen, die einen Kopf (3), ein Gerät, einen beweglichen Arm und ein System zum schnellen Wechseln des Kopfes (3) umfasst, wobei das System Folgendes umfasst:
mindestens einen, vorzugsweise mehr als einen Magneten (11) oder ein anderes Gerät, das ein Magnetfeld erzeugt, der/das in der Lage ist, eine Anziehungskraft zwischen mindestens einem Kopf (3) der Maschine und mindestens einem Gerät der Maschine auszuüben, an dem der Kopf (3) anzubringen ist, und diese Verbindung stabil, aber gleichzeitig lösbar zu machen,
wobei das Gerät, an dem der Kopf (3) anzubringen ist, mit einem beweglichen Arm der Werkzeugmaschine verbunden ist,
**dadurch gekennzeichnet, dass** das Gerät eine vertikale Rotationsachse (8) umfasst, und
wobei das Gerät, an dem der Kopf (3) anzubringen ist, durch eine Scheibe (2) gebildet ist,
wobei die Scheibe (2) an einem Endabschnitt einer vertikalen Rotationsachse (8) befestigt ist, auf welcher sie mit Hilfe einer Passfeder (9) radial arretiert ist,
wobei die Ober- und die Unterseite der Scheibe (2) einige durchgehende Öffnungen (10) zum Aufnehmen zylindrischer Magneten (11) umfassen, welche den gleichen Durchmesser wie die Öffnungen aufweisen und deren Höhe die Dicke der Scheibe (2) nicht überschreitet, so dass die Magneten in der Dicke der Scheibe (2) enthalten sind und von ihr vollständig umschlossen werden, um jegliche Behinderung des Koppelns der zwei Kontaktflächen, der der Scheibe (2) und der des Kopfes (3), zu vermeiden,
wobei es sich bei den Kontaktflächen um die Oberseite einer Halterung (12) für den Kopf (3) und die Unterseite der Scheibe (2) handelt, wobei die Kontaktflächen eben sind, um eine korrekte mechanische Ausrichtung des Kopfes (3) und der Scheibe (2) beizubehalten,
wobei die vertikale Rotationsachse (8) ein verlängertes Ende aufweist und der Kopf (3) mit einer mittigen kalibrierten Öffnung (16) ausgestattet ist, um das verlängerte Ende der Achse (8) aufzunehmen, welches kalibriert ist,
wobei die Scheibe (2) eine Öffnung (15) umfasst, die einen kalibrierten Zapfen (13) zur winkligen Ausrichtung enthält, wobei sich der Zapfen längs erstreckt, um eine Stelle in einer Fräsung (14) der Kontaktfläche des Kopfes (3) zu finden, welche die gleiche Form und Dicke wie der Zapfen (13) aufweist, um den Kopf (3) in radialer Richtung am Zapfen (13) zu befestigen,
wobei die Scheibe (2) angetrieben und durch einen Zahnriemen gesteuert wird, welcher von einem Drehmotor angetrieben wird.

2. Werkzeugmaschine nach Anspruch 1, wobei die Magneten ferromagnetische Körper sind.

3. Werkzeugmaschine nach Anspruch 1, wobei die Magneten von einer elektrische Maschine gebildet werden, die ein elektrisches Feld erzeugt.

4. Werkzeugmaschine nach einem oder mehreren der vorhergehenden Ansprüche, **dadurch gekennzeichnet, dass** drei oder mehr Magneten bereitgestellt sind.

## Revendications

1. Machine de travail, telle qu'une machine pour la coupe et/ou la décoration de passe-partout, ou d'articles composés de carton, de verre, de céramique ou de matériau similaire, comprenant une tête (3), un dispositif, un bras mobile et un système permettant le changement rapide de la tête (3), ledit système comprenant
au moins un, de préférence plusieurs, aimants (11) ou un autre dispositif générant un champ magnétique, capable d'exercer une force d'attraction entre au moins une tête (3) de ladite machine et au moins un dispositif de ladite machine à laquelle la tête (3) doit être reliée, et permettant de stabiliser cette liaison, tout en étant amovible,
ledit dispositif auquel la tête (3) doit être reliée étant raccordé à un bras mobile de ladite machine de travail,
**caractérisée en ce qu'**elle comprend un axe de rotation vertical (8), et
ledit dispositif auquel la tête (3) doit être reliée est formé par une poulie (2);
ladite poulie (2) est fixée sur une partie finale de l'axe de rotation (8) sur lequel elle est bloquée radialement par l'intermédiaire d'une clavette (9);
la surface supérieure et inférieure de ladite poulie (2) comprend certains orifices de passage (10) conçus pour recevoir des aimants cylindriques (11) ayant le même diamètre que lesdits orifices et une hauteur ne dépassant pas l'épaisseur de la poulie (2) de sorte que lesdits aimants soient compris à l'intérieur de l'épaisseur de la poulie afin d'être entièrement englobés dans celle-ci pour éviter tout obstacle d'accouplement des deux surfaces de contact, de la poulie (2) et de la tête (3);
les surfaces de contact étant la surface supérieure d'un support (12) de la tête (3) et ladite surface inférieure de la poulie (2), lesdites surfaces de contact étant planes afin de maintenir un alignement mécanique correct de ladite tête (3) et de ladite poulie (2);
l'axe de rotation vertical (8) comportant une extrémité étendue et la tête (3) étant équipée d'un orifice central calibré (16) conçu pour recevoir l'extrémité étendue de l'axe (8) qui est calibré ;
la poulie (2) comprenant un orifice (15) contenant une broche calibrée (13) conçue pour assurer l'équilibre angulaire, ladite broche s'étendant en longueur afin de trouver une place dans un fraisage (14) de la surface de contact de la tête (3) ayant la même forme et la même épaisseur que la broche (13) afin de lier la tête (3) dans la direction radiale par rapport à la broche (13);
la poulie (2) étant une poulie entraînée et commandée par une courroie de synchronisation mue par un moteur rotatif.

2. Machine de travail selon la revendication 1, dans laquelle les aimants sont des corps ferromagnétiques.

3. Machine de travail selon la revendication 1, dans laquelle les aimants sont constitués par une machine électrique générant un champ magnétique.

4. Machine de travail selon la ou les revendications précédentes **caractérisée en ce que** trois ou plus de trois aimants sont fournis.
